(19)

Europäisches
Patentamt
European
Patent Office
Office européen
des brevets

(11) **EP 4 006 827 A1**

(12) **EUROPEAN PATENT APPLICATION**
published in accordance with Art. 153(4) EPC

(43) Date of publication:
**01.06.2022 Bulletin 2022/22**

(21) Application number: **20898182.9**

(22) Date of filing: **27.11.2020**

(51) International Patent Classification (IPC):
***G06T 5/50*** (2006.01)

(86) International application number:
**PCT/CN2020/132049**

(87) International publication number:
**WO 2021/115136 (17.06.2021 Gazette 2021/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.12.2019 CN 201911258805**

(71) Applicant: **Wingtech Technology (Shenzhen) Co.,
Ltd.
Shenzhen, Guangdong 518001 (CN)**

(72) Inventor: **JIANG, Tao
Shenzhen, Guangdong 518001 (CN)**

(74) Representative: **Grünecker Patent- und
Rechtsanwälte
PartG mbB
Leopoldstraße 4
80802 München (DE)**

(54) **ANTI-SHAKE METHOD AND APPARATUS FOR VIDEO IMAGE, ELECTRONIC DEVICE, AND STORAGE MEDIUM**

(57) Provided are an anti-shake method and apparatus for a video image, an electronic device and a storage medium. The anti-shake method for the video image includes: dividing a first frame image into a plurality of first sub-images (S110); dividing a second frame image into a plurality of second sub-images, the plurality of second sub-images corresponding to the plurality of first sub-images (S120); determining an offset between each of the second sub-images and the corresponding first sub-image (S130); and adjusting the corresponding second sub-image according to the offset, so as to compensate the second frame image (S140).

FIG. 1

FIG. 2

## Description

This application claims the priority of the Chinese patent application filed on December 10th, 2019 before the Chinese Patent Office with the application number of 201911258805.5, the entire contents of which are incorporated herein by reference.

## TECHNICAL FIELD

The present application relates to the technical field of video image processing, and more particularly, to an anti-shake method and apparatus for a video image, an electronic device and a storage medium.

## BACKGROUND

In video image algorithms, a multi-frame synthesis technology is used more and more widespread. The multi-frame synthesis technology refers to synthesizing multi-frame pictures into one picture, such as multi-frame noise reduction, HDR multi-frame synthesis, multi-frame deblurring, and the like. One important and difficult problem in multi-frame synthesis is how to remove displacement deviation between adjacent frames caused by artificial shake during shooting, and the displacement deviation needs to be accurate to one pixel.

There are some anti-shake methods for video images to solve the problem of displacement deviation. The mainstream anti-shake method is to find out a region containing an overlapped region in adjacent frame images as a feature region, calculate the similarity of each pixel point in the feature region of the adjacent frame images, select the pixel point with the greatest similarity, and calculate offsets of the two adjacent frames in a horizontal direction (hoffset) and in a vertical direction (voffset) based on the pixel point, so as to adjust the two frame images according to the calculated offsets so as to make the displacement deviation of the two frame images as low as possible, thus achieving a better synthesis effect.

However, in the anti-shake method mentioned above, when adjusting the adjacent frame images, the offset employed in each pixel is the same, which leads to that some regions have good synthesis effect and high picture quality after synthesis, while some regions have poor synthesis effect and have the problem of ghosting, such that the synthesis quality of the multi-frame pictures is poor.

## SUMMARY

According to various embodiments of the present application, an anti-shake method and apparatus for a video image, an electronic device and a storage medium are provided.

In an embodiment, the embodiment of the present application provides an anti-shake method for a video image, including:

dividing a first frame image into a plurality of first sub-images;
dividing a second frame image into a plurality of second sub-images, the plurality of second sub-images corresponding to the plurality of first sub-images;
determining an offset between each of the second sub-images and the corresponding first sub-image; and
adjusting the corresponding second sub-image according to the offset, so as to compensate the second frame image .

Optionally, the dividing the first frame image into the plurality of first sub-images includes:

acquiring an edge parameter of the first frame image;
determining a target image region of the first frame image according to the edge parameter; and
dividing the target image region into the plurality of first sub-images.

Optionally, the edge parameter includes a first edge parameter in a height direction and a second edge parameter in a width direction of the first frame image;

a height of the first sub-image is negatively correlated with the first edge parameter; and
a width of the first sub-image is negatively correlated with the second edge parameter.

Optionally, the determining the offset between each of the second sub-images and the corresponding first sub-image includes:

performing feature extraction on the first sub-image to obtain a plurality of feature points corresponding to the first sub-image;

determining a first feature region of the first sub-image according to the plurality of feature points;

in the second sub-image, calculating a second feature region similar to the first feature region; and

determining the offset of the second sub-image relative to the first sub-image according to the first feature region and the second feature region.

Optionally, the adjusting the corresponding second sub-image according to the offset, so as to compensate the second frame image includes:

calculating an offset difference between offsets of two adjacent second sub-images in the second frame image; and

when the offset difference is less than or equal to a preset threshold, adjusting the corresponding second sub-image according to the offsets corresponding to each of the second sub-images to compensate the second frame image.

Optionally, the method further includes:

when the offset difference is greater than the preset threshold, dividing the plurality of second sub-images into a plurality of image sub-regions respectively;

determining one or more target image sub-regions in the plurality of image sub-regions; smoothing an offset of the target image sub-region to obtain a corrected offset corresponding to the target image sub-region; and

adjusting the corresponding second sub-image according to the corrected offset, so as to compensate the second frame image.

Optionally, the dividing the plurality of second sub-images into the plurality of image sub-regions respectively includes:

taking one of the two adjacent second sub-images with the offset difference greater than the preset threshold as a target second sub-image;

determining a plurality of second sub-images adjacent to the target second sub-image in the second frame image as adjacent second sub-images; and

dividing each of the adjacent second sub-images into a plurality of image sub-regions.

Optionally, the smoothing the offset of the target image sub-region to obtain the corrected offset corresponding to the target image sub-region includes:

calculating an average value of the offsets between the target image sub-region and a plurality of adjacent image sub-regions corresponding to the target image sub-region; and

taking the average value of the offsets as the corrected offset of the target image sub-region.

In an embodiment, the embodiment of the present application provides an anti-shake apparatus for a video image, including:

a first dividing module, configured for dividing a first frame image into a plurality of first sub-images;

a second dividing module, configured for dividing a second frame image into a plurality of second sub-images, the plurality of second sub-images corresponding to the plurality of first sub-images;

an offset determination module, configured for determining an offset between each of the second sub-images and the corresponding first sub-image; and

a compensation module, configured for adjusting the corresponding second sub-image according to the offset, so as to compensate the second frame image.

In an embodiment, the embodiment of the present application provides an electronic device, including a memory and one or more processors, wherein computer-readable instructions are stored in the memory, and the computer-readable instructions, when being executed by the processor, enables the one or more processors to execute the following steps of:

dividing a first frame image into a plurality of first sub-images;

dividing the second frame image into a plurality of second sub-images, the plurality of second sub-images corresponding to the plurality of first sub-images;

determining an offset between each of the second sub-images and the corresponding first sub-image; and

adjusting the corresponding second sub-image according to the offset, so as to compensate the second frame image .

The processor, when executing the computer-readable instructions, further executes the following steps of:

acquiring an edge parameter of the first frame image;
determining a target image region of the first frame image according to the edge parameter; and
dividing the target image region into the plurality of first sub-images.

The processor, when executing the computer-readable instructions, further executes the following steps of:

performing feature extraction on the first sub-image to obtain a plurality of feature points corresponding to the first sub-image;
determining a first feature region of the first sub-image according to the plurality of feature points;
in the second sub-image, calculating a second feature region similar to the first feature region; and
determining the offset of the second sub-image relative to the first sub-image according to the first feature region and the second feature region.

The processor, when executing the computer-readable instructions, further executes the following steps of:

calculating an offset difference between offsets of two adjacent second sub-images in the second frame image;
when the offset difference is less than or equal to a preset threshold, adjusting the corresponding second sub-image according to the offsets corresponding to each of the second sub-images to compensate the second frame image.
when the offset difference is greater than the preset threshold, dividing the plurality of second sub-images into a plurality of image sub-regions respectively;
determining one or more target image sub-regions in the plurality of image sub-regions; smoothing an offset of the target image sub-region to obtain a corrected offset corresponding to the target image sub-region; and
adjusting the corresponding second sub-image according to the corrected offset, so as to compensate the second frame image.

The processor, when executing the computer-readable instructions, further executes the following steps of:

taking one of the two adjacent second sub-images with the offset difference greater than the preset threshold as a target second sub-image;
determining a plurality of second sub-images adjacent to the target second sub-image in the second frame image as adjacent second sub-images; and
dividing each of the adjacent second sub-images into a plurality of image sub-regions.

In an embodiment, the embodiment of the present application provides a computer-readable storage medium storing a computer program thereon, wherein the computer program, when executed by a processor, implements the anti-shake method for the video image according to any embodiment of the present application.
Details of one or more embodiments of the present application are set forth in the following accompanying drawing and descriptions.

**BRIEF DESCRIPTION OF THE DRAWINGS**

In order to illustrate the technical solutions in the embodiments of the present application more clearly, the accompanying drawings used in the description of the embodiments will be briefly described below. The accompanying drawings in the following description only illustrate some embodiments of the present application. Those having ordinary skills in the art can obtain other drawings according to these drawings.

FIG. 1 is an application scenario diagram of an anti-shake method for a video image provided by an embodiment of the present application;
FIG. 2 is a flowchart of an anti-shake method for a video image provided by an embodiment of the present application;
FIG. 3 is a flowchart of an anti-shake method for a video image provided by an embodiment of the present application;
FIG. 4 is a schematic structural diagram of a plurality of second sub-images provided by an embodiment of the present application;
FIG. 5 is a schematic diagram of a plurality of image sub-regions provided by an embodiment of the present application;
FIG. 6 is a schematic structural diagram of an anti-shake apparatus for a video image provided by an embodiment of the present application; and

FIG. 7 is a schematic structural diagram of an electronic device provided by an embodiment of the present application.

**DETAILED DESCRIPTION**

The present application is described below with reference to the accompanying drawings and the embodiments. The embodiments described herein are merely illustrative of the present application and are not intended to limit the present application.For ease of description, the accompanying drawings only show a part of the structure related to the present application, but not all of the structure.

Some exemplary embodiments are described as processes or methods depicted as flowcharts. Although the flowchart describes the steps as sequential processing, many steps may be implemented in parallel, concurrently or simultaneously. In addition, orders of the steps may be rearranged. The processing may be terminated when the operation is completed, but there may be additional steps not included in the accompanying drawings. The processing may correspond to methods, functions, procedures, subroutines, subprograms, and the like.

In addition, the terms "first", "second" and the like may be used herein to describe various directions, actions, steps or elements and the like, but these directions, actions, steps or elements are not limited by these terms. These terms are only used to distinguish a first direction, action, step or element from another direction, action, step or element. For example, without departing from the scope of the present application, a first frame image may also be referred to as a second frame image, and similarly, the second frame image may also be referred to as the first frame image. The first frame image and the second frame image are both frame images, but are not the same frame image. The terms "first" and "second" and the like cannot be understood as indicating or implying relative importance, or implicitly indicating the number of indicated technical features. Therefore, the features defined with "first" and "second" can explicitly or implicitly include one or more of the features. In the description of the present application, the meaning of" a plurality of" is at least two, such as two, three, and the like, unless otherwise defined.

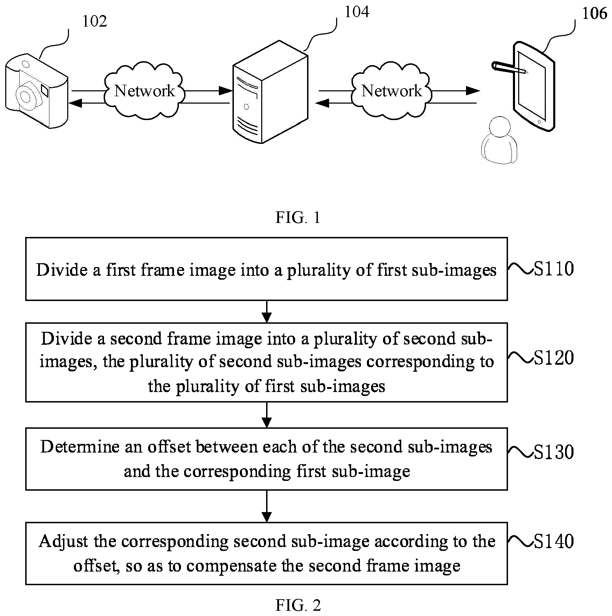

An anti-shake method for a video image provided by the present application may be applied to an application environment as shown in FIG. 1. The anti-shake method for the video image is applied to an anti-shake system for a video image. The anti-shake system for the video image includes a video acquisition device 102, an anti-shake server 104 and a terminal 106.

The video acquisition device 102 is an apparatus with functions of acquiring and storing video images, such as a vedio camera, a camera, a terminal device with a shooting component, and the like. The video capture device 102 may communicate with the terminal 106 through a network. The video capture device 102 may also communicate with the anti-shake server 104 through the network. Relay communication may also be performed between the video acquisition device 102 and the anti-shake server 104 through the terminal 106. The above-mentioned anti-shake method for the video image may be implemented in the video acquisition device 102, or the terminal 106 or the anti-shake server 104. The anti-shake server 104 may be realized by an independent server or a server cluster composed of a plurality of servers. The terminal 106 can be, but is not limited to, various personal computers, laptop computers, smart phones, tablets and portable wearable devices.

In an embodiment, as shown in FIG. 2, an anti-shake method for a video image is provided. The method is applicable to a scenario scene of compensating and optimizing the synthesis of multi-frame pictures. The method may be implemented by an anti-shake apparatus for a video image. The apparatus may be implemented by software and/or hardware and may be integrated on an electronic device. It is explained by taking the method applied to any one of the video acquisition device 102, the anti-shake server 104 and the terminal 106 in FIG. 1 as an example. The method includes the following steps.

At S 110, a first frame image is divided into a plurality of first sub-images.

The first frame image refers to one of multi-frame images. The multi-frame images refer to multiple frame images that need to be synthesized for a certain picture in images or videos. In an embodiment, the multi-frame images may be multiple frame images in the images or multiple frame images of a certain picture in the videos, which are not limited here. The first frame image may be regarded as a reference image. In an embodiment, in multi-frame synthesis, such as HDR (High-Dynamic Range) multi-frame synthesis, multi-frame images will be captured within a certain period of time for synthesis, and the first frame image is one of the multi-frame images. In this embodiment, the first frame image is not limited to a specific frame image. The first sub-image refers to an image region in the first frame image, one first sub-images represents the image region in one first frame image, and all the first sub-images constitute a complete first frame image. In this embodiment, the number of the first sub-images divided is not limited, for example, the first frame image may be divided into six first sub-images according to 2X3, or nine first sub-images according to 3X3. Optionally, the plurality of first sub-images may be divided evenly or unevenly, which is not limited here. In an embodiment, the plurality of first sub-images may be evenly divided.

At S120, the second frame image is divided into a plurality of second sub-images, the plurality of second sub-images corresponding to the plurality of first sub-images.

The second frame image refers to one of multi-frame images. It should be noted that the second frame image and the first frame image are not the same frame image. In an embodiment, the second frame image refers to a frame image that needs to be compensated, that is, an offset needs to be adjusted. The second sub-image refers to an image region in the second frame image. In an embodiment, each second sub-image corresponds to one first sub-image. That is, the second frame image and the first frame image are divided in the same way, and each second sub-image corresponds to one corresponding first sub-image, that is, each second sub-image corresponds to one first sub-image corresponding to the second sub-image with the same area and region. Optionally, the second frame image may be an image adjacent to the first frame image, such as a previous frame image or next frame image of the first frame image; and may also be a frame image that is not adjacent to the first frame image, which is not limited here. It should be noted that the first frame image may be a fixed frame image or a non-fixed frame image, which is not limited here. When the first frame image is a fixed frame image, other frame images are compensated with the first frame image as a reference image. When the first frame image is a non-fixed frame image, the first frame image may also be the second frame image which is compensated. For example, after the previous frame image is compensated, the next frame image is compensated with the previous frame image as the reference image, then the previous frame image completed in this case is regarded as the first frame image and the next frame image is regarded as the second frame image.

At S130, an offset between each of the second sub-images and the corresponding first sub-image is determined.

The offset refers to displacement deviation between different frame images due to the shake when shooting multi-frame images. In an embodiment, the offset refers to offset of the second sub-image relative to the first sub-image. In an embodiment, each second sub-image corresponds to one first sub-image, so each second sub-image has one offset, and the offsets of the second sub-images are not necessarily the same. Illustratively, if there are two second second sub-images A1 and A2, and two first sub-images B1 and B2, A1 corresponds to B1, and A2 corresponds to B2, then A1 has one offset C1 relative to B1 and A2 has one offset C2 relative to B2, and C1 and C2 may be the same or different. In this embodiment, optionally, the offset includes an offset in a vertical direction and an offset in a horizontal direction.

In an embodiment, for the technical solution of determining the offset of two frame images, it is possible to select a feature region with obvious features on the first frame image, move each pixel point of the first frame image pixel by pixel within the range of the feature region, calculate a similarity between the feature region of the first frame image and the second frame image, and find a pixel point with the greatest similarity, so as to determine a moved pixel value through the pixel point with the greatest similarity, so as to obtain the offset of the second frame image relative to the first frame image. How to determine the offset is not limited here.

At S140, the corresponding second sub-image is adjusted according to the offset, so as to compensate the second frame image.

In an embodiment, each second sub-image has one offset, so the corresponding second sub-image is adjusted by the offset of each second sub-image to make the first sub-image be coincident with the corresponding second sub-image as much as possible, so that the multi-frame synthesis effect is better. For example, the displacement deviation of the second sub-image A1 relative to the first sub-image B1 is adjusted by the offset C1, and the displacement deviation of the second sub-image A2 relative to the second sub-image B2 is adjusted by the offset C2, thereby compensating the second frame image. Compensation refers to a processing manner that makes every pixel of the second frame image be coincident with that of the first frame image as much as possible. In an embodiment, each second sub-image is adjusted according to the offset, and the plurality of second sub-images adjusted are almost coincident with the corresponding first sub-images, then the second frame image and the first frame image are correspondingly coincident. Illustratively, take the offset in the horizontal direction as an example, and take a right direction as a positive direction. If the offset is -5, the second sub-image is moved to the left by 5 pixels, so that the second sub-image coincides with the corresponding first sub-image.

In this embodiment, the first frame image and the second frame image are divided into the plurality of sub-images, and each sub-image is adjusted correspondingly, which solves the problem that the offsets in different regions are different, but one offset is used to compensate the whole frame image, thus causing poor synthesis effect of partial regions. Therefore, the second frame image is compensated, so that the multi-frame synthesis effect is better. In an embodiment, the reason for the poor synthesis effect of partial regions may be that the user rotates around an axis parallel to a screen of a mobile terminal or around an axis perpendicular to the screen of the mobile terminal when shooting with the mobile terminal, resulting in different offsets of different regions.

According to the technical solutions of the embodiment of the present application, the first frame image is divided into the plurality of first sub-images; the second frame image is divided into the plurality of second sub-images, the plurality of second sub-images corresponding to the plurality of first sub-images; the offset between each of the second sub-images and the corresponding first sub-image is determined; and the corresponding second sub-image is adjusted according to the offset, so as to compensate the second frame image; the offsets of the plurality of second sub-images of the second frame image are independently adjusted, instead of using one offset to compensate the whole frame image, and the offset corresponding to each second sub-image is independently adjusted, so as to achieve the technical effect of optimizing the synthesis quality of multi-frame images.

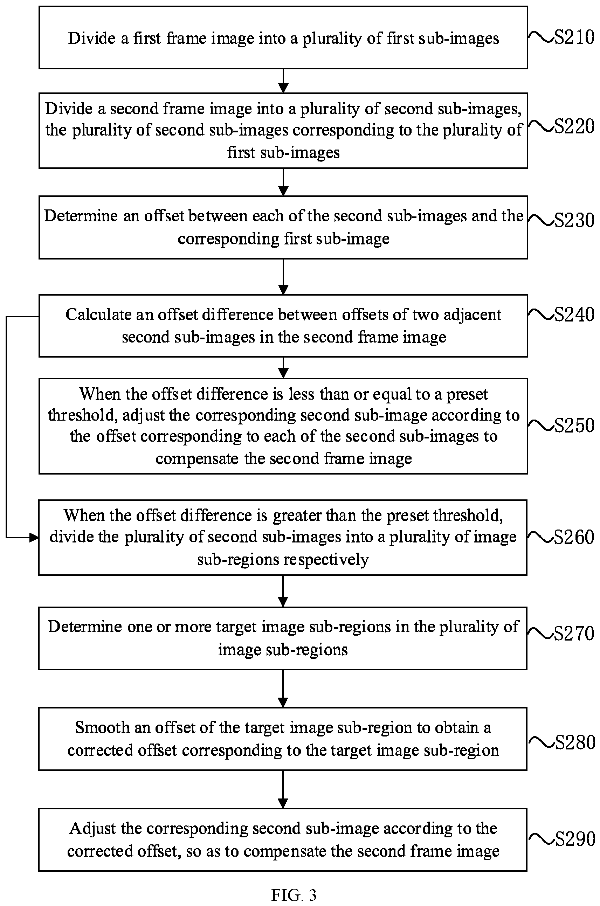

In an embodiment, FIG. 3 is a flow chart of an anti-shake method for a video image provided by the embodiments of the present application. This embodiment is explained on the basis of the foregoing technical solution, and is suitable for a scenario of of compensating and optimizing the synthesis of multi-frame images. The method can be executed by an anti-shake device for video images, which can be implemented by software and/or hardware and can be integrated on electronic equipment. Taking the application of this method to any one of the video acquisition device 102, the anti-shake server 104 and the terminal 106 in Figure 1 as an example, the method includes the following steps:
At S210, a first frame image is divided into a plurality of first sub-images.

The first frame image refers to one of multi-frame images. The first frame image may be regarded as a reference image. In an embodiment, in multi-frame synthesis, such as HDR multi-frame synthesis, multi-frame images will be captured within a certain period of time for synthesis, and the first frame image is one of the multi-frame images. In this embodiment, the first frame image is not limited to a specific frame image. The first sub-image refers to an image region in the first frame image, one first sub-images represents the image region in one first frame image, and all the first sub-images constitute a complete first frame image.

In an optional embodiment, the dividing the first frame image into the plurality of first sub-images may include: acquiring an edge parameter of the first frame image; determining a target image region of the first frame image according to the edge parameter; and dividing the target image region into the plurality of first sub-images.

The edge parameter refers to a pixel value of an image that does not participate in the division, and the edge parameter may be preset. The target image region refers to an image region that needs to be divided in the first frame image after excluding the image regions that do not participate in the division according to the edge parameter. Optionally, the edge parameter includes a first edge parameter in a height direction and a second edge parameter in a width direction of the first frame image; a height of the first sub-image is negatively correlated with the first edge parameter; and a width of the first sub-image is negatively correlated with the second edge parameter. The negative correlation means that the larger the value of the first edge parameter is, the smaller the height of the corresponding first sub-image is. In an embodiment, in order to improve the quality of the compensated second frame image, when dividing the plurality of first sub-images, the whole first frame image is not divided, but the middle part of the first frame image is divided. In an embodiment, optionally, the target image region is evenly divided. In an embodiment, the target image is divided evenly by the following formula:

$$\text{height of each first sub-image hh} = (h\text{-pad1*2})/m, \text{ and width of each first sub-image ww} = (w\text{-pad2*2})/n.$$

hh refers to the height of each sub-image, ww refers to the width of each sub-image, h refers to the height of the first frame image, w refers to the width of the first frame image, pad1 refers to the first edge parameter along the height direction, pad2 refers to the second edge parameter along the width direction, m refers to a first dividing parameter and n refers to a second dividing parameter.

The first edge parameter and the second edge parameter may be any numerical value greater than 1, which is not limited here. Optionally, the first edge parameter in the height direction and the second edge parameter in the width direction are both 25. For example, if the image pixels of the first frame image are $100\times100$ points, and the first edge parameter and the second edge parameter are both 25, then the 25 image pixels at the upper, lower, left and right edges of the first frame image do not participate in the division, that is, the actual divided region is 50X50 pixel points in the middle part.n and m are related to the evenly divided number. In an embodiment, n is a number of columns and m is a number of rows in the grid. For example, when the first frame image is evenly divided into a nine-grid image of 3X3, m is 3 and n is 3. When the first frame image is evenly divided into a six-grid image of 2X3 (two rows and three columns, m is 3 and n is 3.

At S220, the second frame image is divided into a plurality of second sub-images, the plurality of second sub-images corresponding to the plurality of first sub-images.

The second frame image refers to one of multi-frame images. It should be noted that the second frame image and the first frame image are not the same frame image. In an embodiment, the second frame image refers to a frame image that needs to be compensated, that is, an offset needs to be adjusted. The second sub-image refers to an image region in the second frame image. In an embodiment, each second sub-image corresponds to one first sub-image. That is, the second frame image and the first frame image are divided in the same way, and each second sub-image corresponds to one first sub-image, that is, the first frame image has the first sub-image corresponding to each second sub-image with the same region and size.

At S230, an offset between each of the second sub-images and the corresponding first sub-image is determined.

The offset refers to displacement deviation between different frame images due to the artificial shake when shooting multi-frame images. In this embodiment, the offset refers to the offset of the second sub-image relative to the first sub-image. In an embodiment, each second sub-image corresponds to one first sub-image, so each second sub-image has one offset, and the offsets of different second sub-images are not necessarily the same.

In an optional embodiment, the determining the offset between each of the second sub-images and the corresponding first sub-image may include: performing feature extraction on the first sub-image to obtain a plurality of feature points corresponding to the first sub-image; determining a first feature region of the first sub-image according to the plurality of feature points; in the second sub-image, calculating a second feature region similar to the first feature region; and determining the offset of the second sub-image relative to the first sub-image according to the first feature region and the second feature region.

The first feature region refers to a set of feature points extracted according to a preset rule. The feature points are representative pixel points in the first sub-image. For example, in the first frame image including a portrait, after the first frame image is divided into first sub-image, if one of the first sub-image includes a human face, then the pixel points containing the human face in the first sub-image are the feature points, and the region containing the human face is the first feature region. In an embodiment, a region obtained by connecting the plurality of feature points end to end is taken as the first feature region. In an embodiment, extracting the feature points according to the preset rule means extracting the feature points according to the preset rule in the whole range of the first frame image, for example, for an image with a width-height ratio of 3000*4000, 50 points on the 40th row, 50 points on the 60th row, 50 points on the 10th row, 50 points on the 10th row and 50 points on the 10th,..., row may be extracted. Extracting the feature points according to the above method is equivalent to dispersing the feature points to the whole image, which avoids the problem of feature region loss caused by fixedly selecting a block in the first frame image as the feature region and improves the accuracy of feature selection. In addition, extracting the feature points according to the preset rule effectively controls the number of feature points in the feature region and can improve the efficiency and real-time performance of a system. In an embodiment, the second feature region refers to the feature region in the second frame image most similar to the first feature region. The second feature region is a set of feature points extracted according to a preset rule, and the preset rule for extracting from the second feature region is the same as the preset rule for extracting from the first feature region. In an embodiment, within a preset error range, a plurality of candidate feature regions corresponding to the first feature region are extracted from the second sub-image corresponding to the first sub-image, and similarities between the candidate feature regions and the first feature region are calculated respectively; and the candidate feature region with the greatest similarity is regarded as the second feature region similar to the first feature region. The candidate feature region efers to an image region in the second sub-image with the same pixel area as that of the first feature region. In this embodiment, the offset is a coordinate difference of pixel points at the same positions in the first feature region and the second feature region.

At S240, an offset difference between offsets of two adjacent second sub-images in the second frame image is calculated.

The offset difference refers to an absolute value of a difference of the offsets corresponding to two adjacent second sub-images. Illustratively, the second sub-image A1 and the second sub-image A2 are adjacent, the offset of the second sub-image A1 is C1, and the offset of the second sub-image A2 is C2, so the offset difference is the absolute value of (C1-C2).

At S250, when the offset difference is less than or equal to a preset threshold, the corresponding second sub-image is adjusted according to the offset corresponding to each of the second sub-images to compensate the second frame image.

The preset threshold refers to determining whether the offset meets a condition of compensating the second frame image. In this embodiment, optionally, the preset thresholds may be any numerical value greater than 1, which is not limited here. Optionally, the preset threshold is 2. In an embodiment, each second sub-image has one offset, so the second sub-image is adjusted by the offset corresponding to each second sub-image to make the second sub-image be coincident with the corresponding first sub-image as much as possible, so that the multi-frame synthesis effect is better. For example, the displacement deviation of the second sub-image A1 relative to the first sub-image B 1 is adjusted by the offset C1, and the displacement deviation of the second sub-image A2 relative to the second sub-image B2 is adjusted by the offset C2, thereby compensating the second frame image. In an embodiment, the adjustment process may be to move the second sub-image by the offset, which is not limited here. Take the offset in the horizontal direction as an example, and take the right direction as the positive direction. If the offset of the second sub-image A2 relative to the first sub-image B2 is -5, the second sub-image A2 is moved to the left by 5 pixels relative to the first sub-image B2.

At S260, when the offset difference is greater than the preset threshold, the plurality of second sub-images is divided into a plurality of image sub-regions respectively.

The image sub-region refers to the image region obtained by carrying out fission on the second sub-image. In an embodiment, when the offset difference is greater than the preset threshold, the plurality of second sub-images is divided to obtain a plurality of image sub-regions. For example, if the offset difference between the second sub-image A1 and the second sub-image A2 is greater than the preset threshold, all the second sub-images in the second frame image may be divided, or part of the second sub-images in the second frame image may be divided to obtain a plurality of image sub-regions, which is not limited here.

In an optional embodiment, the dividing plurality of second sub-images into the plurality of image sub-regions respectively may include: taking one of the two adjacent second sub-images with the offset difference greater than the preset threshold as a target second sub-image; determining a plurality of second sub-images adjacent to the target second sub-image in the second frame image as adjacent second sub-images; and dividing each of the adjacent second sub-images into a plurality of image sub-regions.

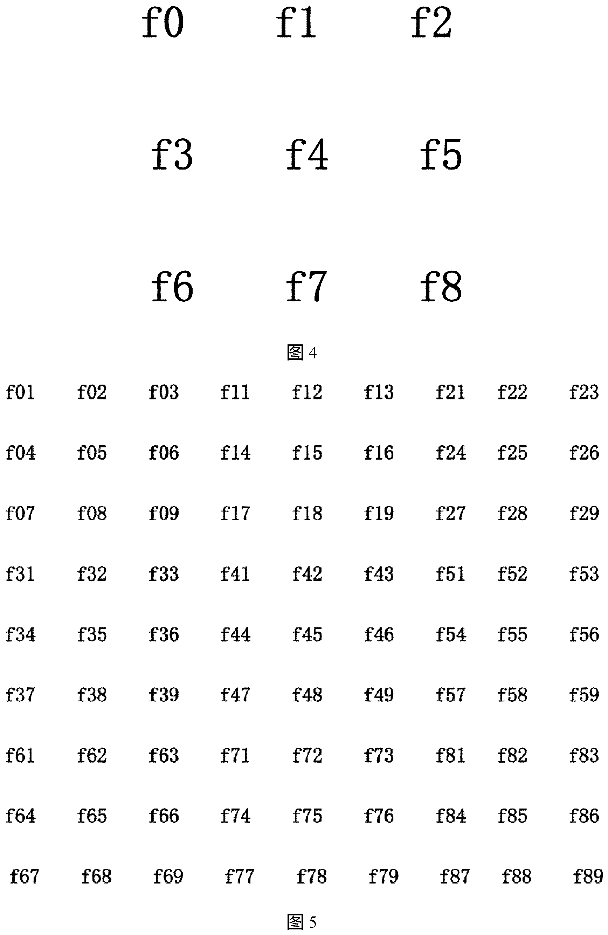

Illustratively, when the offset difference between the second sub-image A and the second sub-image B is greater than the preset threshold, the second sub-image A or the second sub-image B is taken as the target second sub-image. The adjacent second sub-images refer to the second sub-images adjacent to the target second sub-image, including left-right adjacent, up-down adjacent and diagonal adjacent second sub-images. Reference may be made to FIG. 4. FIG. 4 is a schematic structural diagram of the plurality of second sub-images provided by this embodiment. Taking f0 being the target second sub-image as an example, the adjacent second sub-images are f1, f3 and f4.

At S270, one or more target image sub-regions are determined in the plurality of image sub-regions.

The target image sub-region refers to the image region needing to be smoothed. In an embodiment, when all the second sub-images in the second frame image are divided to obtain the plurality of image sub-regions, each image sub-region may be used as the target image sub-region. When part of the second sub-images in the second frame image are divided to obtain the plurality of image sub-regions, the target image sub-region may be an image sub-region at an intersection of two adjacent second sub-images. Reference may be made to FIG. 5. FIG. 5 is a schematic diagram of the plurality of image sub-regions provided by this embodiment. For example, if an offset difference between f0 and f1 is greater than the preset threshold, then f03, f06, f09, f11, f14 and f17 may be smoothed as the target image sub-regions.

At S280, an offset of the target image sub-region is smoothed to obtain a corrected offset corresponding to the target image sub-region.

Smoothing refers to a processing method of reducing the offset difference between two adjacent second sub-images. Optionally, smoothing may be to take the target image sub-region as the center to acquire a plurality of adjacent image sub-regions at preset positions from the target image sub-region, and take the average value of the offsets between the target image sub-region and the plurality of adjacent image sub-regions as the corrected offset to replace the original offset. In an embodiment, each second sub-image is obtained by fission of the second sub-image. Therefore, if the image sub-region is regarded as a sub-image and the second sub-image as a parent image, then the image sub-region inherits the offset of the corresponding parent image. For example, if the image sub-region A1 is obtained by fission of the second sub-image A, then the offset value of the image sub-region A1 is consistent with the offset value of the second sub-image A.

In an optional embodiment, the smoothing the offset of the target image sub-region to obtain the corrected offset corresponding to the target image sub-region may include: calculating an average value of the offsets between the target image sub-region and a plurality of adjacent image sub-regions corresponding to the target image sub-region; and taking the average value of the offsets as the corrected offset of the target image sub-region.

The target image sub-region refers to the image region needing to be smoothed. The adjacent image sub-regions refer to the image sub-region at a preset position from the target image sub-region, including left-right adjacent, up-down adjacent and diagonal adjacent image sub-regions.

Reference may be made to FIG. 4 and FIG. 5 at the same time. FIG. 4 is a schematic structural diagram of the plurality of second sub-images provided by this embodiment. FIG. 5 is a schematic diagram of the plurality of image sub-regions provided by this embodiment.

In an embodiment, if an offset difference between the second sub-image f0 and the second sub-image f1 is greater than the preset threshold, then the second sub-image f0 may be split into nine image sub-regions such as f01, f02, f03, f04, f05, f06, f07, f08 and f09 by fission, and the adjacent second sub-images f1, f3 and f4 may also be divided into a plurality of image sub-regions. Offsets of the image sub-regions f01, f02, f03, f04, f05, f06, f07, f08 and f09 are consistent with the offset of the second sub-image f0. When f03 is the target image sub-region, the adjacent image sub-regions are f02, f05, f06, f14 and f11. When f09 is the target image sub-region, the adjacent image sub-regions are f05, f06, f14, f17, f41, f33, f32 and f08. That is, the correction offset is the average value of the offsets of the target image sub-region and all adjacent image sub-regions. For example, the corrected offset of f09 is (f09+f05+f06+f14+f17+f41+f33+f32+f08)/9.

At S290, the corresponding second sub-image is adjusted according to the corrected offset, so as to compensate the second frame image.

In an embodiment, adjusting refers to moving the second sub-image according to the corrected offset. Compensation refers to making the second sub-image be coincident with the corresponding first sub-image as much as possible by moving according to the corrected offset. In this embodiment, by dividing the adjacent second sub-images with an offset difference greater than the preset threshold into the plurality of image sub-regions, and then smoothing the plurality of image sub-regions, the problem that the adjacent places have obvious boundaries due to the larger offset difference of the adjacent second sub-images is avoided, so that the image quality is affected, and the synthesis quality of multi-frame images is improved. It should be understood that although the steps in the flowcharts of FIG. 2 to FIG. 5 are shown in sequence as indicated by arrows, these steps are not necessarily executed in sequence as indicated by the arrows. Unless explicitly stated herein, there is no strict sequence restriction on the execution of these steps, and these steps may be executed in other sequences. Moreover, at least a part of the steps in FIG. 2 to FIG. 5 may include a plurality of sub-steps or stages, and these sub-steps or stages are not necessarily completed at the same time, but may be executed at different times, and the order of execution of these sub-steps or stages is not necessarily sequential, but may be executed in turn or alternately with other steps or at least a part of sub-steps of other steps or stages.

According to the technical solutions of the embodiment of the present application, the first frame image is divided into the plurality of first sub-images; the second frame image is divided into the plurality of second sub-images, the plurality of second sub-images corresponding to the plurality of first sub-images; the offset between each of the second sub-images and the corresponding first sub-image is determined; and the corresponding second sub-image is adjusted according to the offset, so as to compensate the second frame image; the offsets of the plurality of second sub-images of the second frame image are independently adjusted, instead of using one offset to compensate the whole frame image, and the offset corresponding to each second sub-image is independently adjusted, so as to achieve the technical effect of optimizing the synthesis quality of multi-frame images.

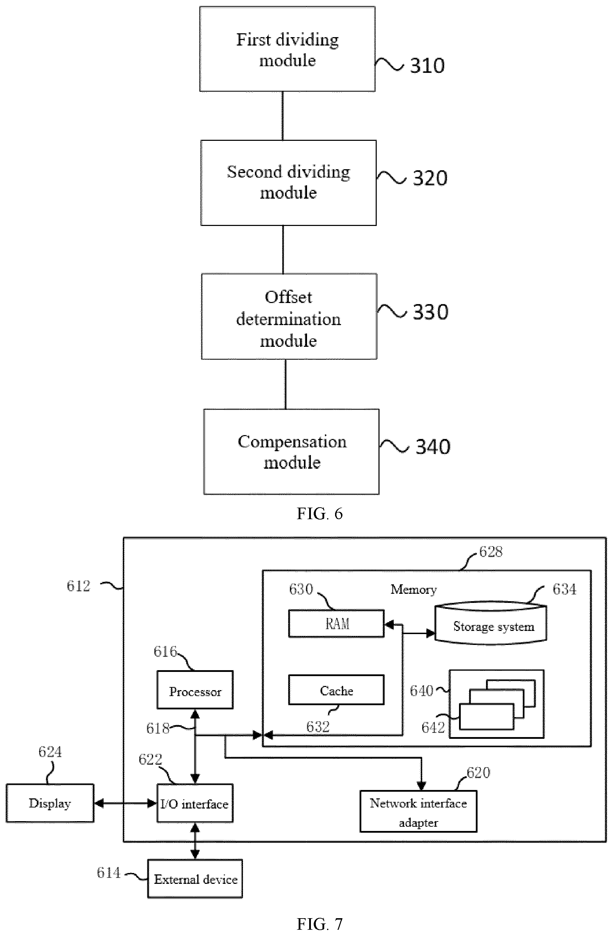

In an embodiment, as shown in FIG. 6, an anti-shake apparatus for a video image is provided, including a first dividing module 310, a second dividing module 320, an offset determination module 330 and a compensation module 340, wherein:
the first dividing module 310 is configured for dividing a first frame image into a plurality of first sub-images.

The second dividing module 320 is configured for dividing a second frame image into a plurality of second sub-images, the plurality of second sub-images corresponding to the plurality of first sub-images.

The offset determination module 330 is configured for determining an offset between each of the second sub-images and the corresponding first sub-image.

The compensation module 340 is configured for adjusting the corresponding second sub-image according to the offset, so as to compensate the second frame image.

Optionally, the first dividing module 310 includes: an edge parameter acquisition unit, configured for acquiring an edge parameter of the first frame image, wherein the edge parameter includes a first edge parameter in a height direction and a second edge parameter in a width direction of the first frame image, a height of the first sub-image is negatively correlated with the first edge parameter, and a width of the first sub-image is negatively correlated with the second edge parameter; a target image region determination unit, configured for determining a target image region of the first frame image according to the edge parameter; and a first sub-image dividing unit, configured for dividing the target image region into the plurality of first sub-images.

Optionally, the offset determination module 330 includes: a feature extraction unit, configured for performing feature extraction on the first sub-image to obtain a plurality of feature points corresponding to the first sub-image; a first feature region determination unit, configured for determining a first feature region of the first sub-image according to the plurality of feature points; a second feature region calculating unit, configured for, in the second sub-image, calculating a second feature region similar to the first feature region; and an offset determination unit, configured for determining the offset of the second sub-image relative to the first sub-image according to the first feature region and the second feature region. Optionally, the compensation module 340 includes: an offset difference calculating unit, configured for calculating an offset difference between offsets of two adjacent second sub-images in the second frame image; a first compensation unit, configured for, when the offset difference is less than or equal to a preset threshold, adjusting the corresponding second sub-image according to the offsets corresponding to each of the second sub-images to compensate the second frame image; an image sub-region dividing unit, configured for, when the offset difference is greater than the preset threshold, dividing the plurality of second sub-images into a plurality of image sub-regions respectively; a target image sub-region determination unit, configured for determining one or more target image sub-regions in the plurality of image sub-regions; a smoothing unit, configured for smoothing an offset of the target image sub-region to obtain a corrected offset corresponding to the target image sub-region; and a second compensation unit, configured for adjusting the corresponding second sub-image according to the corrected offset, so as to compensate the second frame image.

Optionally, the image sub-region dividing unit includes: a target second sub-image determination sub-unit, configured for taking one of the two adjacent second sub-images with the offset difference greater than the preset threshold as a target second sub-image; an adjacent second sub-image determination sub-unit, configured for determining a plurality of second sub-images adjacent to the target second sub-image in the second frame image as adjacent second sub-images; and an image sub-region dividing sub-unit, configured for dividing each of the adjacent second sub-images into a plurality of image sub-regions.

Optionally, the smoothing unit includes: a unit for calculating average value of offsets, configured for calculating an average value of the offsets between the target image sub-region and a plurality of adjacent image sub-regions corresponding to the target image sub-region; and a corrected offset determination unit, configured for taking the average value of the offsets as the corrected offset of the target image sub-region.

The anti-shake apparatus for the video image provided by the embodiment of the present application can implement the anti-shake method for the video image provided by any embodiment of the present application, and has corresponding functional modules and beneficial effects for implementing the method. Contents not described in the embodiment of the present application may refer to the description in any method embodiment of the present application. Each module in the above-mentioned anti-shake apparatus for the video image may be implemented in whole or in part by software, hardware and combinations thereof. The above modules may be embedded in or independent of a processor in a computer device in the form of hardware, or stored in a memory in the computer device in the form of software, so that the processor can call and execute the operations corresponding to the above modules.

In an embodiment, FIG. 7 is a schematic structural diagram of an electronic device provided by the embodiment of the present application. FIG. 7 illustrates a schematic block diagram of an electronic device 612 suitable for implementing the embodiments of the present application. The electronic device 612 illustrated in FIG. 7 is merely an example and should not impose any limitation on the function and range of application of the embodiment of the present application.

As shown in FIG. 7, the electronic device 612 may be embodied in the form of a general electronic device. Components of the electronic device 612 may include one or more processors 616, a memory 628, and a bus 618 connected with different system components (including the memory 628 and the processor 616).

The bus 618 represents one or more of several types of bus structures, including a memory unit bus or a memory controller, a peripheral bus, a graphics acceleration port, a processor, or a local bus using any of a variety of bus structures. For example, these architectures include an Industry Subversive Alliance (ISA) bus, a Micro Channel Architecture (MAC) bus, an Enhanced ISA bus, a Video Electronics Standards Association (VESA) local bus and a Peripheral Component Interconnect (PCI) bus.

The electronic device 612 includes a plurality of computer-readable storage media. These media may be any available media that can be accessed by the electronic device 612, including volatile and nonvolatile media as well as removable and non-removable media.

The memory 628 may include a computer-readable storage medium in the form of volatile memory, such as a Random Access Memory (RAM) 630 and/or a cache 632. The terminal 612 may include other removable/non-removable as well as volatile/nonvolatile computer system storage media. By way of example only, the storage system 634 may be used to read and write non-removable and non-volatile magnetic media (not shown in FIG. 7, commonly referred to as "hard disk drive"). Although not shown in FIG. 7, a magnetic disk drive for reading and writing from removable and nonvolatile magnetic disks (such as "floppy disks") and an optical disk drive for reading and writing from removable and nonvolatile optical disks, such as Compact Disc Read-Only Memory (CD-ROM), Digital Video Disc-Read Only Memory (DVD-ROM) or other optical media. In these cases, each drive may be connected to the bus 618 through one or more data medium interfaces. The memory 628 may include at least one computer-readable instruction product. The computer-readable instruction product is provided with a set of (for example, at least one) computer-readable instruction modules, and these computer-readable instruction modules are configured to perform the functions of various embodiments of the present application.

A computer-readable instruction/utility 640 with a set of (at least one) computer-readable instruction modules 642 may be stored in, for example, the memory 628. Such computer-readable instruction modules 642 include an operating system, one or more application computer-readable instructions, other computer-readable instruction modules and computer-readable instruction data, and each or some combination of these examples may include the implementation of a network environment. The computer-readable instruction modules 642 generally perform the functions and/or methods in the embodiments of the present application described herein.

The electronic device 612 may also communicate with one or more external devices 614 (e.g., a keyboard, a pointing terminal, a display 624, or the like), and may also communicate with one or more terminals that enable the user to interact with the electronic device 612, and/or communicate with any terminal (e.g., a network card, a modem, or the like) that enables the electronic device 612 to communicate with one or more other computing terminals. This communication may be performed via an Input/Output (I/O) interface 622. Moreover, the electronic device 612 may also communicate with one or more networks (e.g., a Local Area Network (LAN), a Wide Area Network (WAN), and/or a public network, such as the Internet) through a network interface adapter 620. As shown in FIG. 7, the network interface adapter 620 communicates with other modules of the electronic device 612 via the bus 618.It should be understood that although not shown in the figure, other hardware and/or software modules may be utilized in conjunction with the electronic device 612, including: a microcode, a terminal drive, a redundant processor, an external disk drive array, a Redundant Arrays of Independent Disks (RAID) system, a tape drive, and a data backup storage system, and the like. Those skilled in the art can understand that the structure shown in FIG. 7 is only a block diagram of some structures related to the solutions of the present application and does not constitute a limitation on the computer device to which the solutions of the present application is applied. The computer device may include more or fewer components than those shown in the figure, or may combine some components, or have different component arrangements.

A computer device includes a memory and one or more processors, computer-readable instructions are stored in the memory. The computer-readable instructions, when being executed by the processor, enable the one or more processors to execute the following steps of: dividing a first frame image into a plurality of first sub-images; dividing the second frame image into a plurality of second sub-images, the plurality of second sub-images corresponding to the plurality of first sub-images; determining an offset between each of the second sub-images and the corresponding first sub-image; and adjusting the corresponding second sub-image according to the offset, so as to compensate the second frame image.

In an embodiment, the processor, when executing the computer-readable instructions, also realizes the following steps of: acquiring an edge parameter of the first frame image; determining a target image region of the first frame image according to the edge parameter; and dividing the target image region into the plurality of first sub-images.

In an embodiment, the processor, when executing the computer-readable instructions, also realizes the following steps of:
a height of the first sub-image is negatively correlated with the first edge parameter; and a width of the first sub-image is negatively correlated with the second edge parameter.

In an embodiment, the processor, when executing the computer-readable instructions, also realizes the following steps of: performing feature extraction on the first sub-image to obtain a plurality of feature points corresponding to the first sub-image; determining a first feature region of the first sub-image according to the plurality of feature points; in the second sub-image, calculating a second feature region similar to the first feature region; and determining the offset of the second sub-image relative to the first sub-image according to the first feature region and the second feature region.

In an embodiment, the processor, when executing the computer-readable instructions, also realizes the following steps of: calculating an offset difference between offsets of two adjacent second sub-images in the second frame image; when the offset difference is less than or equal to a preset threshold, adjusting the corresponding second sub-image according to the offset corresponding to each of the second sub-images to compensate the second frame image; when the offset difference is greater than the preset threshold, dividing the plurality of second sub-images into a plurality of image sub-regions respectively; determining one or more target image sub-regions in the plurality of image sub-regions; smoothing an offset of the target image sub-region to obtain a corrected offset corresponding to the target image sub-region; and adjusting the corresponding second sub-image according to the corrected offset, so as to compensate the second frame image.

In an embodiment, the processor, when executing the computer-readable instructions, also realizes the following steps of: taking one of the two adjacent second sub-images with the offset difference greater than the preset threshold as a target second sub-image; determining a plurality of second sub-images adjacent to the target second sub-image in the second frame image as adjacent second sub-images; and dividing each of the adjacent second sub-images into a plurality of image sub-regions.

In an embodiment, the processor, when executing the computer-readable instructions, also realizes the following steps of: calculating an average value of the offsets between the target image sub-region and a plurality of adjacent image sub-regions corresponding to the target image sub-region; and taking the average value of the offsets as the corrected offset of the target image sub-region.

According to the technical solutions of the embodiment of the present application, the first frame image is divided into the plurality of first sub-images; the second frame image is divided into the plurality of second sub-images, the plurality of second sub-images corresponding to the plurality of first sub-images; the offset between each of the second sub-images and the corresponding first sub-image is determined; and the corresponding second sub-image is adjusted according to the offset, so as to compensate the second frame image; the offsets of the plurality of second sub-images of the second frame image are independently adjusted, instead of using one offset to compensate the whole frame image, and the offset corresponding to each second sub-image is independently adjusted, so as to achieve the technical effect of optimizing the synthesis quality of multi-frame images.

In an embodiment, the embodiment of the present application also provides a computer-readable storage medium storing a computer program thereon, wherein the computer program, when executed by a processor, implements the anti-shake method for the video image according to any embodiment of the present application. The method may include the steps of:
dividing a first frame image into a plurality of first sub-images; dividing the second frame image into a plurality of second sub-images, the plurality of second sub-images corresponding to the plurality of first sub-images; determining an offset between each of the second sub-images and the corresponding first sub-image; and adjusting the corresponding second sub-image according to the offset, so as to compensate the second frame image.

In an embodiment, the processor, when executing the computer-readable instructions, also realizes the following steps of: acquiring an edge parameter of the first frame image; determining a target image region of the first frame image according to the edge parameter; and dividing the target image region into the plurality of first sub-images.

In an embodiment, the processor, when executing the computer-readable instructions, also realizes the following steps of:
a height of the first sub-image is negatively correlated with the first edge parameter; and a width of the first sub-image is negatively correlated with the second edge parameter.

In an embodiment, the processor, when executing the computer-readable instructions, also realizes the following steps of: performing feature extraction on the first sub-image to obtain a plurality of feature points corresponding to the first sub-image;determining a first feature region of the first sub-image according to the plurality of feature points; in the second sub-image, calculating a second feature region similar to the first feature region; and determining the offset of the second sub-image relative to the first sub-image according to the first feature region and the second feature region.

In an embodiment, the processor, when executing the computer-readable instructions, also realizes the following steps of: calculating an offset difference between offsets of two adjacent second sub-images in the second frame image;when the offset difference is less than or equal to a preset threshold, adjusting the corresponding second sub-image according to the offset corresponding to each of the second sub-images to compensate the second frame image.when the offset difference is greater than the preset threshold, dividing the plurality of second sub-images into a plurality of image sub-regions respectively; determining one or more target image sub-regions in the plurality of image sub-regions; smoothing an offset of the target image sub-region to obtain a corrected offset corresponding to the target image sub-region; and adjusting the corresponding second sub-image according to the corrected offset, so as to compensate the second frame image.

In an embodiment, the processor, when executing the computer-readable instructions, also realizes the following steps of: taking one of the two adjacent second sub-images with the offset difference greater than the preset threshold as a target second sub-image; determining a plurality of second sub-images adjacent to the target second sub-image in the second frame image as adjacent second sub-images; and dividing each of the adjacent second sub-images into a plurality of image sub-regions.

In an embodiment, the processor, when executing the computer-readable instructions, also realizes the following steps of: calculating an average value of the offsets between the target image sub-region and a plurality of adjacent image sub-regions corresponding to the target image sub-region; and taking the average value of the offsets as the corrected offset of the target image sub-region.

The computer-readable storage medium of the embodiment of the present application may be any combination of one or more computer-readable media. The computer-readable medium may be a computer-readable signal medium or a computer-readable storage medium. The computer-readable storage medium may be, for example, an electronic, magnetic, optical, electromagnetic, infrared, or semiconductor system, apparatus, or device, or any combination of the above. The computer-readable storage medium may include: an electrical connection with one or more wires, a portable computer disk, a hard disk, a random access memory (RAM), a read-only memory (ROM), an erasable programmable read only memory (EPROM or flash), an optical fiber, a portable compact disk read-only memory (CD-ROM), an optical memory device, a magnetic memory device, or any suitable combination of the above. The computer-readable storage medium herein may be any tangible medium containing or storing a computer-readable instruction that may be used by or in connection with an instruction execution system, apparatus, or device.

The computer-readable signal medium may include a data signal that is propagated in a baseband or as part of a carrier, in which a computer-readable instruction code is carried. Such propagated data signal may be in a variety of forms including an electromagnetic signal, an optical signal, or any suitable combination of the foregoing. The computer-readable signal medium may also be any computer-readable medium other than a computer-readable storage medium, and the computer-readable medium can transmit, propagate or transport a computer-readable instruction for use by or in connection with the instruction execution system, apparatus or device. The computer-readable instruction code included in the storage medium may be transmitted by any suitable medium, including wireless, electric wire, optical cable, RF, and the like, or any suitable combination of the above.

The computer-readable instruction code for performing the operations of the present application may be written in any combination of one or more computer-readable instruction design languages, wherein the computer-readable instruction design languages include object-oriented computer-readable instruction design languages such as Java, Smalltalk and C++, and further include conventional procedural computer-readable instruction design languages such as "C" language or a similar computer-readable instruction design language. The computer-readable instruction code can be executed entirely on a user computer, partially executed on the user computer, as a stand-alone software package, partially executed on the user computer and partially executed on a remote computer, or entirely executed on the remote computer or a terminal. In the case of involving in the remote computer, the remote computer may be connected to the user computer via any kind of network, including a local area network (LAN) or a wide area network (WAN), or may be connected to an external computer (e.g.,connected via the Internet by using an Internet service provider).

The technical features of the above embodiments can be combined in any way. In order to simplify the description, not all the possible combinations of the technical features of the above embodiments are described. However, as long as there is no contradiction in the combinations of these technical features, they should be considered as the scope recorded in this specification.

According to the technical solutions of the embodiments of the present application, the first frame image is divided into the plurality of first sub-images; the second frame image is divided into the plurality of second sub-images, the plurality of second sub-images corresponding to the plurality of first sub-images; the offset between each of the second sub-images and the corresponding first sub-image is determined; and the corresponding second sub-image is adjusted according to the offset, so as to compensate the second frame image; the offsets of the plurality of second sub-images of the second frame image are independently adjusted, instead of using one offset to compensate the whole frame image, and the offset corresponding to each second sub-image is independently adjusted, so as to achieve the technical effect of optimizing the synthesis quality of multi-frame images.

**Claims**

1. An anti-shake method for a video image, the video image comprising multi-frame images, and the multi-frame images comprising a first frame image and a second frame image; the method comprising:

   dividing the first frame image into a plurality of first sub-images;
   dividing the second frame image into a plurality of second sub-images, the plurality of second sub-images corresponding to the plurality of first sub-images;
   determining an offset between each of the second sub-images and the corresponding first sub-image; and
   adjusting the corresponding second sub-image according to the offset, so as to compensate the second frame image.

2. The anti-shake method for the video image according to claim 1, **characterized in that**, the dividing the first frame image into the plurality of first sub-images comprises:

   acquiring an edge parameter of the first frame image;
   determining a target image region of the first frame image according to the edge parameter; and
   dividing the target image region into the plurality of first sub-images.

3. The anti-shake method for the video image according to claim 2, **characterized in that**, the edge parameter comprises a first edge parameter in a height direction and a second edge parameter in a width direction of the first frame image;

   a height of the first sub-image is negatively correlated with the first edge parameter; and
   a width of the first sub-image is negatively correlated with the second edge parameter.

4. The anti-shake method for the video image according to claim 1, **characterized in that**, the determining the offset between each of the second sub-images and the corresponding first sub-image comprises:

   performing feature extraction on the first sub-image to obtain a plurality of feature points corresponding to the first sub-image;
   determining a first feature region of the first sub-image according to the plurality of feature points;
   in the second sub-image, calculating a second feature region similar to the first feature region; and
   determining the offset of the second sub-image relative to the first sub-image according to the first feature region and the second feature region.

5. The anti-shake method for the video image according to claim 1, **characterized in that**, the adjusting the corresponding second sub-image according to the offset, so as to compensate the second frame image comprises:

   calculating an offset difference between offsets of two adjacent second sub-images in the second frame image; and
   when the offset difference is less than or equal to a preset threshold, adjusting the corresponding second sub-image according to the offsets corresponding to each of the second sub-images to compensate the second frame image.

6. The anti-shake method for the video image according to claim 5, further comprising:

   when the offset difference is greater than the preset threshold, dividing the plurality of second sub-images into a plurality of image sub-regions respectively;
   determining one or more target image sub-regions in the plurality of image sub-regions;

smoothing an offset of the target image sub-region to obtain a corrected offset corresponding to the target image sub-region; and

adjusting the corresponding second sub-image according to the corrected offset, so as to compensate the second frame image.

7. The anti-shake method for the video image according to claim 5 or 6, **characterized in that**, the dividing the plurality of second sub-images into the plurality of image sub-regions respectively comprises:

taking one of the two adjacent second sub-images with the offset difference greater than the preset threshold as a target second sub-image;

determining a plurality of second sub-images adjacent to the target second sub-image in the second frame image as adjacent second sub-images; and

dividing each of the adjacent second sub-images into a plurality of image sub-regions.

8. The anti-shake method for the video image according to claim 5 or 6, **characterized in that**, the smoothing the offset of the target image sub-region to obtain the corrected offset corresponding to the target image sub-region comprises:

calculating an average value of the offsets between the target image sub-region and a plurality of adjacent image sub-regions corresponding to the target image sub-region; and

taking the average value of the offsets as the corrected offset of the target image sub-region.

9. An anti-shake apparatus for a video image, comprising:

a first dividing module, configured for dividing a first frame image into a plurality of first sub-images;

a second dividing module, configured for dividing a second frame image into a plurality of second sub-images, the plurality of second sub-images corresponding to the plurality of first sub-images;

an offset determination module, configured for determining an offset between each of the second sub-images and the corresponding first sub-image; and

a compensation module, configured for adjusting the corresponding second sub-image according to the offset, so as to compensate the second frame image.

10. An electronic device, comprising a memory and one or more processors, **characterized in that**, computer-readable instructions are stored in the memory, and the computer-readable instructions, when being executed by the one or more processors, enables the one or more processors to execute the following steps of:

dividing a first frame image into a plurality of first sub-images;

dividing the second frame image into a plurality of second sub-images, the plurality of second sub-images corresponding to the plurality of first sub-images;

determining an offset between each of the second sub-images and the corresponding first sub-image; and

adjusting the corresponding second sub-image according to the offset, so as to compensate the second frame image .

11. The electronic device according to claim 10, **characterized in that**, the processor, when executing the computer-readable instructions, further executes the following steps of:

acquiring an edge parameter of the first frame image;

determining a target image region of the first frame image according to the edge parameter; and

dividing the target image region into the plurality of first sub-images.

12. The electronic device according to claim 10, **characterized in that**, the processor, when executing the computer-readable instructions, further executes the following steps of:

performing feature extraction on the first sub-image to obtain a plurality of feature points corresponding to the first sub-image;

determining a first feature region of the first sub-image according to the plurality of feature points;

in the second sub-image, calculating a second feature region similar to the first feature region; and

determining the offset of the second sub-image relative to the first sub-image according to the first feature region and the second feature region.

13. The electronic device according to claim 10, **characterized in that**, the processor, when executing the computer-readable instructions, further executes the following steps of:

calculating an offset difference between offsets of two adjacent second sub-images in the second frame image;
when the offset difference is less than or equal to a preset threshold, adjusting the corresponding second sub-image according to the offsets corresponding to each of the second sub-images to compensate the second frame image;
when the offset difference is greater than the preset threshold, dividing the plurality of second sub-images into a plurality of image sub-regions respectively;
determining one or more target image sub-regions in the plurality of image sub-regions;
smoothing an offset of the target image sub-region to obtain a corrected offset corresponding to the target image sub-region; and
adjusting the corresponding second sub-image according to the corrected offset, so as to compensate the second frame image.

14. The electronic device according to claim 13, **characterized in that**, the processor, when executing the computer-readable instructions, further executes the following steps of:

taking one of the two adjacent second sub-images with the offset difference greater than the preset threshold as a target second sub-image;
determining a plurality of second sub-images adjacent to the target second sub-image in the second frame image as adjacent second sub-images; and
dividing each of the adjacent second sub-images into a plurality of image sub-regions.

15. A computer-readable storage medium storing a computer program, **characterized in that**, the computer program, when executed by a processor, implements the anti-shake method for the video image according to any one of claims 1 to 8.

FIG. 1

| Divide a first frame image into a plurality of first sub-images | ∿S110 |

↓

| Divide a second frame image into a plurality of second sub-images, the plurality of second sub-images corresponding to the plurality of first sub-images | ∿S120 |

↓

| Determine an offset between each of the second sub-images and the corresponding first sub-image | ∿S130 |

↓

| Adjust the corresponding second sub-image according to the offset, so as to compensate the second frame image | ∿S140 |

FIG. 2

Divide a first frame image into a plurality of first sub-images ⟶ S210

Divide a second frame image into a plurality of second sub-images, the plurality of second sub-images corresponding to the plurality of first sub-images ⟶ S220

Determine an offset between each of the second sub-images and the corresponding first sub-image ⟶ S230

Calculate an offset difference between offsets of two adjacent second sub-images in the second frame image ⟶ S240

When the offset difference is less than or equal to a preset threshold, adjust the corresponding second sub-image according to the offset corresponding to each of the second sub-images to compensate the second frame image ⟶ S250

When the offset difference is greater than the preset threshold, divide the plurality of second sub-images into a plurality of image sub-regions respectively ⟶ S260

Determine one or more target image sub-regions in the plurality of image sub-regions ⟶ S270

Smooth an offset of the target image sub-region to obtain a corrected offset corresponding to the target image sub-region ⟶ S280

Adjust the corresponding second sub-image according to the corrected offset, so as to compensate the second frame image ⟶ S290

FIG. 3

f0 f1 f2

f3 f4 f5

f6 f7 f8

图 4

| f01 | f02 | f03 | f11 | f12 | f13 | f21 | f22 | f23 |
|-----|-----|-----|-----|-----|-----|-----|-----|-----|
| f04 | f05 | f06 | f14 | f15 | f16 | f24 | f25 | f26 |
| f07 | f08 | f09 | f17 | f18 | f19 | f27 | f28 | f29 |
| f31 | f32 | f33 | f41 | f42 | f43 | f51 | f52 | f53 |
| f34 | f35 | f36 | f44 | f45 | f46 | f54 | f55 | f56 |
| f37 | f38 | f39 | f47 | f48 | f49 | f57 | f58 | f59 |
| f61 | f62 | f63 | f71 | f72 | f73 | f81 | f82 | f83 |
| f64 | f65 | f66 | f74 | f75 | f76 | f84 | f85 | f86 |
| f67 | f68 | f69 | f77 | f78 | f79 | f87 | f88 | f89 |

图 5

First dividing module 310

Second dividing module 320

Offset determination module 330

Compensation module 340

FIG. 6

612

628

Memory

630 RAM 634 Storage system

616 Processor

Cache

640

632 642

618

624 Display

622 I/O interface

620 Network interface adapter

614 External device

FIG. 7

**INTERNATIONAL SEARCH REPORT**

| International application No. |
|---|
| **PCT/CN2020/132049** |

**A. CLASSIFICATION OF SUBJECT MATTER**

G06T 5/50(2006.01)i

According to International Patent Classification (IPC) or to both national classification and IPC

**B. FIELDS SEARCHED**

Minimum documentation searched (classification system followed by classification symbols)

G06T, H04N

Documentation searched other than minimum documentation to the extent that such documents are included in the fields searched

Electronic data base consulted during the international search (name of data base and, where practicable, search terms used)

WPI, EPODOC, CNPAT, CNKI, IEEE, GOOGLE: 视频, 图像, 防抖, 子图像, 子区域, 分块, 划分, 切分, 分割, 偏移, 补偿, 调整, 平滑, 阈值, 阀值, video, image, anti-shake, sub-image, sub-region, divid+, segment+, offset, compensat+, adjustment+, smooth+, threshold

**C. DOCUMENTS CONSIDERED TO BE RELEVANT**

| Category* | Citation of document, with indication, where appropriate, of the relevant passages | Relevant to claim No. |
|---|---|---|
| PX | CN 111028191 A (SHANGHAI WINGTECH TECHNOLOGY CO., LTD.) 17 April 2020 (2020-04-17) claims 1-10, description, paragraphs [0006]-[0047], figures 1-6 | 1-15 |
| Y | CN 108234859 A (MEIZU TELECOM EQUIPMENT CO., LTD.) 29 June 2018 (2018-06-29) claims 1-10, description, paragraphs [0053]-[0131], figures 1-10 | 1-15 |
| Y | CN 109194877 A (GUANGDONG OPPO MOBILE TELECOMMUNICATIONS CORP., LTD.) 11 January 2019 (2019-01-11) claims 1-10, description, paragraphs [0035]-[0053], figures 2-8 | 1-15 |
| A | CN 109194878 A (SHENZHEN WENYAO ELECTRONIC TECHNOLOGY CO., LTD.) 11 January 2019 (2019-01-11) entire document | 1-15 |
| A | US 2011134329 A1 (CHEN, Chao-ho et al.) 09 June 2011 (2011-06-09) entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 February 2021** | **08 March 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/132049**

| Patent document cited in search report | | | Publication date (day/month/year) | Patent family member(s) | | | Publication date (day/month/year) |
|---|---|---|---|---|---|---|---|
| CN | 111028191 | A | 17 April 2020 | None | | | |
| CN | 108234859 | A | 29 June 2018 | None | | | |
| CN | 109194877 | A | 11 January 2019 | None | | | |
| CN | 109194878 | A | 11 January 2019 | None | | | |
| US | 2011134329 | A1 | 09 June 2011 | US | 8891625 | B2 | 18 November 2014 |
| | | | | TW | 201120812 | A | 16 June 2011 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911258805